# EUROPÄISCHE PATENTSCHRIFT

(11) **EP 3 014 259 B1**
(45) Veröffentlichungstag und Bekanntmachung des Hinweises auf die Patenterteilung: **20.01.2021**
(21) Anmeldenummer: 14759121.8
(22) Anmeldetag: 25.08.2014
(51) Int. Cl.: G01N 27/90, G01L 1/12

(54) **SENSORANORDNUNG UND VERFAHREN ZUR BESTIMMUNG DER MECHANISCHEN OBERFLÄCHENSPANNUNGEN UND/ODER DES GEFÜGEZUSTANDES**
SENSOR ASSEMBLY AND METHOD FOR DETERMINING MECHANICAL SURFACE TENSIONS AND/OR THE MICROSTRUCTURE STATE
SYSTÈME DE CAPTEUR ET PROCÉDÉ POUR DÉTERMINER LES TENSIONS MÉCANIQUES DE SURFACE ET/OU L'ÉTAT DE STRUCTURE MICROSCOPIQUE

(30) Priorität: 03.09.2013 EP 13182806
(43) Veröffentlichungstag der Anmeldung: 04.05.2016
(73) Patentinhaber: Siemens Aktiengesellschaft, 80333 München (DE)
(72) Erfinder: BRUMMEL, Hans-Gerd, 13465 Berlin (DE); PFEIFER, Uwe, 12557 Berlin (DE)
(86) Internationale Anmeldenummer: PCT/EP2014/067964
(87) Internationale Veröffentlichungsnummer: WO 2015/032638

(56) Entgegenhaltungen:
- EP-A1- 2 574 912
- GB-A- 2 456 583
- JP-A- S5 744 850
- US-A- 3 535 625
- US-A1- 2012 126 833

## Beschreibung

Die Erfindung betrifft eine Sensoranordnung zur Erfassung von Oberflächenspannungen und/oder des Gefügezustandes eines ferromagnetischen Werkstücks und ein Verfahren zur Bestimmung der mechanischen Oberflächenspannungen und/oder des Gefügezustandes.

Die Bestimmung des Oberflächenspannungszustandes und/oder des Gefügezustandes stellt eine wichtige Aufgabe bei der Überwachung der Beanspruchung mechanischer Werkstücke dar. Hierzu existieren verschiedene Messverfahren. Eines der am häufigsten angewandten Verfahren arbeitet mit Dehnmessstreifen, die zu diesem Zweck am Messpunkt auf der Oberfläche mit einem aufwändigen Verfahren aufgebracht werden müssen. Bei bewegten Werkstücken ist zusätzlich eine Telemetrieanlage zur aktiven Speisung und Messwertübertragung erforderlich. Des Weiteren sind auch berührungslos arbeitende optische Verfahren bekannt. Beides ist jedoch sehr aufwändig.

Aus der US 2012/126833 A1 sind eine Vorrichtung und ein Verfahren zur berührungslosen Ermittlung von Spannung und Dehnung in leitfähigen Materialien bekannt. Das beschriebene Messprinzip beruht auf der Induktion eines Wechselstroms entlang eines ersten Wegs in dem Material und der Detektion eines durch die Induktion erzeugten Signals. Hierfür wird eine Sensoranordnung mit vier Basisspulensystemen offenbart, wovon jeweils zwei Basisspulensysteme eine identische Orientierung aufweisen, so dass die Basisspulensysteme insgesamt in zwei Richtungen orientiert sind. Aus den lediglich zwei betrachteten Richtungen lassen sich richtungsabhängige Spannungszustände nicht ermitteln. Mit anderen Worten ist die Sensoranordnung zur Messung einer zweidimensionalen Spannungsverteilung sowie der zusätzlich zu betrachtenden Schubspannung unterbestimmt. Dieser Nachteil wird dadurch behoben, dass der Sensorkopf drehbar ausgestaltet ist, um über zusätzliche Messungen mit unterschiedlicher Sensororientierung die notwendige dritte Bedingung zur Lösung der Spannungsgleichungssystems zu erhalten. Die notwendige Verfahrung des Sensorkopfs hat allerdings den Nachteil, dass Messungen nicht direkt, sondern nur jeweils in zeitlich getrennten Schritten durchgeführt werden können.

Aus der US 3 535 625 A sind verschiedene Spulenkonfigurationen bekannt, die in einer Vorrichtung zur Detektion mechanischer Änderungen in ferromagnetischen oder diamagnetischen Materialien genutzt werden können.

Es ist daher eine erste Aufgabe der Erfindung eine Sensoranordnung anzugeben, welche das oben genannte Problem löst. Eine weitere Aufgabe ist die Angabe eines Verfahrens zur Bestimmung der mechanischen Oberflächenspannungen und/oder des Gefügezustandes eines ferromagnetischen Werkstücks.

Erfindungsgemäß wird die erste Aufgabe mit der Angabe einer Sensoranordnung zur Erfassung von Oberflächenspannungen und/oder des Gefügezustandes eines ferromagnetischen Werkstücks gelöst, wobei:
- zumindest ein in einer ersten Richtung angeordnetes erstes Basisspulensystem mit einer ersten Richtungssensitivität vorgesehen ist, wobei das erste Basisspulensystem zumindest eine Erregerspule und eine Empfängerspule auf einem gemeinsamen Ferritkern zur richtungssensitiven magnetischen Durchflutung einer Oberfläche des Werkstücks und zur richtungsabhängigen Bestimmung der Permeabilität umfasst,
- zumindest ein in einer zweiten Richtung angeordnetes zweites Basisspulensystem mit einer zweiten Richtungssensitivität vorgesehen ist, wobei das zweite Basisspulensystem zumindest eine Erregerspule und eine Empfängerspule auf einem gemeinsamen Ferritkern zur richtungssensitiven magnetischen Durchflutung einer Oberfläche des Werkstücks und zur richtungsabhängigen Bestimmung der Permeabilität umfasst,
- zumindest ein in einer dritten Richtung angeordnetes drittes Basisspulensystem mit einer dritten Richtungssensitivität vorgesehen ist, wobei das dritte Basisspulensystem zumindest eine Erregerspule und eine Empfängerspule auf einem gemeinsamen Ferritkern zur richtungssensitiven magnetischen Durchflutung einer Oberfläche des Werkstücks und zur richtungsabhängigen Bestimmung der Permeabilität umfasst,
- und wobei zumindest das erste Basisspulensystem und das zweite Basisspulensystem einen ersten Differenzwinkel und das zweite Basisspulensystem und das dritte Basisspulensystem einen zweiten Differenzwinkel ausbilden,
- und wobei das erste Basisspulensystem außerhalb der zweiten Richtungssensitivität und der dritten Richtungssensitivität, das zweite Basisspulensystem außerhalb der ersten Richtungssensitivität und der dritten Richtungssensitivität und das dritte Basisspulensystem außerhalb der ersten Richtungssensitivität und der zweiten Richtungssensitivität angeordnet ist, und wobei die Sensoranordnung so aufgebaut ist, dass die Spulenachsen des ersten Basisspulensystems des zweiten Basisspulensystems und des dritten Basisspulensystems in Bezug zur Oberfläche des Werkstücks während der Messung orthogonal ausgerichtet sind,
- so dass mittels eines jeden Basisspulensystems ein unabhängiger Messwert zur Ermittlung eines vollständigen Eigenspannungstensor erhältlich ist, woraus die mechanischen Oberflächenspannungen des Werkstücks zumindest teilweise ermittelbar sind.

Die vorgeschlagene Erfindung basiert auf der Anwendung einer speziell gestalteten und angeordneten Sensoranordnung aus mehreren Basisspulensystemen. Ein nachgeschalteter Rechenalgorithmus bestimmt den Betrag und die Richtung der einwirkenden mechanischen Oberflächenspannungen. Zur richtungsabhängigen Bestimmung der Permeabilität und damit des mechanischen Spannungszustandes ist auch eine möglichst richtungsempfindliche magnetische Durchflutung der Werkstückoberfläche erforderlich. Die Erfassung der mechanischen Spannungen erfolgt dabei berührungslos, d.h. die Sensoranordnung kommt nicht in direkten Kontakt mit der Oberfläche. Es müssen auch keine Hilfsmittel auf die Oberfläche aufgebracht werden und es muss keine Bearbeitung der Werkstückoberfläche erfolgen, sofern eine bestimmte Rauigkeit bzw. Ebenheit in Bezug zur Sensoranordnung gegeben ist. Die Sensoranordnung ist in der Lage, den Hauptspannungszustand im Messpunkt zu ermitteln. Aus dem Hauptspannungszustand können danach die Vektorkomponenten der Zug- bzw. Druckspannungen und die Schubspannungen in beliebigen Orientierungsrichtungen berechnet werden. Die Sensoranordnung kann vorteilhafterweise auch an bewegten Werkstücken, also z.B. an rotierenden Wellen angewandt werden. Die Erfindung erlaubt ein berührungsloses und applikationsfreies Messprinzip, durch welches sehr viele Messpunkte an einem Werkstück innerhalb kurzer Zeit vermessen werden können, oder sogar eine Oberflächenkartierung erfolgen kann. Selbstverständlich kann die Sensoranordnung auch noch weitere Basisspulensysteme umfassen. Durch die Verwendung von mehr als drei solchen Basisspulensystemen können zusätzliche Redundanzen erzeugt werden, oder z.B. auch Plausibilitätsprüfungen durchgeführt werden.

Ein Basisspulensystem umfasst zumindest eine Erregerspule und eine Empfängerspule. Dies ist eine sehr einfache Ausführung eines Basisspulensystems.

In bevorzugter Ausgestaltung weist die Erregerspule als auch die Empfängerspule einen Spulenkern mit einem Spulenkerndurchmesser auf. Die Richtungssensitivität ist nun durch das Verhältnis des Abstandes der beiden Spulenkerne und/oder durch das Verhältnis der beiden Spulenkerndurchmesser gegeben.

Aus dem Verhältnis des Durchmessers und des Abstandes der Spulenkerne ergibt sich die Richtungsempfindlichkeit der Anordnung. Kleine Kerndurchmesser und große Kernabstände ergeben eine sehr richtungsempfindliche Sensoranordnung. Allerdings muss bei großen Kernabständen beachtet werden, dass im Einflussgebiet eine inhomogene Spannungsverteilung bestehen kann, die dann durch das Spulensystem quasi integriert, d.h. in der Fläche gemittelt wird. Bei der Dimensionierung des Spulensystems ist es daher von Vorteil, einen Kompromiss zwischen Richtungssensitivität und räumlicher Auflösung anzustreben.

In bevorzugter Ausgestaltung umfasst das erste Basisspulensystem und/oder das zweite Basisspulensystem und/oder das dritte Basisspulensystem eine Erregerspule und eine Empfängerspule, welche auf einem U-Ferritkern angeordnet sind. Bevorzugt umfasst das erste Basisspulensystem und/oder das zweite Basisspulensystem und/oder das dritte Basisspulensystem eine Erregerspule und eine erste Empfängerspule und eine zweite Empfängerspule, welche auf einem U-Ferritkern und/oder EI-Ferritkern angeordnet sind, wobei die Erregerspule zwischen, insbesondere zentral zwischen, der ersten Empfängerspule und der zweiten Empfängerspule angeordnet ist. Selbstverständlich können auch andere Anordnungen möglich sein.

Bevorzugt weisen zumindest zwei Erregerspulen der drei Basisspulensysteme eine Reihenschaltung auf. Neben dem Abgleich der Empfangsspulensysteme ist dabei besonders auf eine identische Erregung zu achten. Durch eine z.B. elektrische Reihenschaltung der Erregerspulen wird nun bei der elektrischen Verschaltung des ersten Basisspulensystems und des zweiten Basisspulensystems und des dritten Basisspulensystems eine möglichst gleiche Empfindlichkeit erreicht. Es sind auch andere elektrische oder elektronische Maßnahmen möglich, um eine möglichst gleiche Empfindlichkeit der verschiedenen Basisspulensysteme zu erreichen.

Neben der Anordnung von separaten Basisspulensystemen mit unterschiedlichem Ferritkern können diese Basisspulensysteme auch auf einem Ferritkern vereint werden, z.B. auf einer Verbundspule. Dazu ist allerdings die Verlagerung der Anordnungsgeometrie in die Gestalt des Ferritkerns (bzw. allgemein des Spulenkerns) notwendig. Dies bedeutet, dass die vorher in drei Basisspulensystemen realisierte Funktionalität, nämlich die magnetische Durchflutung eines Oberflächenbereiches in mindestens drei verschiedenen Richtungen, nun mit nur einem Spulenträger bzw. Ferritkern realisiert wird.

Bevorzugt sind die zumindest drei Basisspulensysteme durch ein Verbundspulensystem gegeben, welches als ein erstes Basisspulensystem eine Verbunderregerspule und eine erste Verbundempfängerspule umfasst, als ein zweites Basisspulensystem die Verbunderregerspule und eine zweite Verbundempfängerspule und als ein drittes Basisspulensystem die Verbunderregerspule und eine dritte Verbundempfängerspule sowie eine weitere, vierte Verbundempfängerspule und wobei die Verbunderregerspule und die vier Verbundempfängerspulen auf einem gemeinsamen Ferritkern angeordnet sind. Bevorzugt weisen weiterhin die vier Empfängerspulen den gleichen Abstand zur Verbunderregerspule auf, wobei jeweils benachbarte Empfängerspulen im gleichen Abstand zueinander angeordnet sind. Das hat neben einer symmetrischen Anordnung auch den Vorteil einfacher Gleichungssysteme, welche für die Berechnung der Oberflächenspannung günstig ist. Außerdem kompensieren sich auf diese Weise Unsymmetrien in der Herstellung der Sensoranordnung.

Bevorzugt sind die zumindest drei Basisspulensysteme durch ein Verbundspulensystem gegeben, welches als ein erstes Basisspulensystem eine Verbunderregerspule und eine erste Verbundempfängerspule umfasst, als ein zweites Basisspulensystem die Verbunderregerspule und eine zweite Verbundempfängerspule und als ein drittes Basisspulensystem die Verbunderregerspule und eine dritte Verbundempfängerspule und wobei die drei Verbundempfängerspulen sowie die Verbunderregerspule auf einem gemeinsamen Ferritkern angeordnet sind. In bevorzugter Ausgestaltung weisen die drei Verbundempfängerspulen den gleichen Abstand zur Verbunderregerspule auf, wobei jeweils benachbarten Empfängerspulen im gleichen Abstand zueinander angeordnet sind. In bevorzugter Ausgestaltung sind die zumindest drei Basisspulensysteme durch ein Verbundspulensystem gegeben, welches als ein erstes Basisspulensystem eine Verbunderregerspule und eine erste Verbundempfängerspule umfasst, als ein zweites Basisspulensystem die Verbunderregerspule und eine zweite Verbundempfängerspule und als ein drittes Basisspulensystem die Verbunderregerspule sowie eine dritte Verbundempfängerspule, eine vierte Verbundempfängerspulen, eine fünfte Verbundempfängerspule und eine sechste Verbundempfängerspule und wobei die sechs Verbundempfängerspulen sowie die Verbunderregerspule auf einem gemeinsamen Ferritkern angeordnet sind. Bevorzugt weisen die sechs Verbundempfängerspulen den gleichen Abstand zur Verbunderregerspule auf, wobei jeweils benachbarte Empfängerspulen im gleichen Abstand zueinander angeordnet sind. Das hat -wie oben- neben einer symmetrischen Anordnung auch den Vorteil einfacher Gleichungssysteme, welche für die Berechnung der Oberflächenspannung günstig sind. Außerdem kompensieren sich auf diese Weise Unsymmetrien in der Herstellung der Sensoranordnung. Auch hier sind alle Verbundspulen auf einem gemeinsamen Ferritkern angeordnet.

Die Empfangsspulen dieser Verbundsysteme sind im Falle mehrerer Spulen pro Richtungssystem vorzugsweise in Reihenschaltung zu betreiben.

Die separaten Basisspulensysteme und/oder die einer Orientierungsrichtung zugeordneten Spulensysteme auf dem gemeinsamen Ferritkern sind in bestimmten Differenzwinkelorientierungen zueinander angeordnet.

Bevorzugt ist der erste Differenzwinkel gleich dem zweiten Differenzwinkel und beträgt insbesondere 45 Grad. Alternativ betragen der erste Differenzwinkel und der zweite Differenzwinkel 60 Grad. Auch können der erste Differenzwinkel und der zweite Differenzwinkel 120 Grad betragen. Auch hier ist neben einer symmetrischen Anordnung auch der Vorteil einfacher Gleichungssysteme für eine anschließende Bestimmung der Oberflächenspannung des Werkstücks zu nennen. Zudem kompensieren sich auf diese Weise auch hier bestimmte Unsymmetrien in der Herstellung der Sensoranordnung. Ebenso sind beliebige Differenzwinkel möglich.

Die Spulenachse ist dadurch definiert, dass diese in der Mitte der Spule senkrecht durch eine Ebene verläuft, welche von den Windungen der Spule gebildet wird. Die Anordnung der Basisspulensysteme und/oder des Verbundspulensystems in Bezug zur Oberfläche des Werkstücks wird dabei so gewählt, dass eine orthogonale Ausrichtung der Spulenachsen zur Werkstückoberfläche erreicht wird, d.h. die offenen Querschnitte der Spulenschenkel sind parallel zur Werkstückoberfläche. Dabei weist die Sensoranordnung zu dieser Oberfläche des ferromagentischen Werkstücks einen Nennabstand auf, wobei zumindest das erste Basisspulensystem und das zweite Basisspulensystem und das dritte Basisspulensystem in Richtung untereinander einen Abstand von maximal 20% dieses Nennabstands aufweist. Besitzt die Sensoranordnung jedoch eine robuste Abstandskompensation, kann dieser Wert selbstverständlich auch höher sein. Die Sensoranordnung kann zudem an allen Punkten der Werkstückoberfläche in geringem Abstand positioniert werden.

In bevorzugter Ausgestaltung ist zumindest das erste Basisspulensystem als auch das zweite Basisspulensystem als auch das dritte Basisspulensystem an einer geeigneten Haltevorrichtung angeordnet. Dies erleichtert die Handhabung.

Die auf das Verfahren bezogene zweite Aufgabe wird durch die Angabe eines Verfahrens zur Bestimmung der mechanischen Oberflächenspannungen und/oder des Gefügezustandes eines ferromagnetischen Werkstücks durch die folgenden Schritte gelöst:
- Bestimmung von drei unabhängigen Messwerten durch eine Sensoranordnung nach einem der vorhergehenden Ansprüche,
- Ermittlung der richtungsabhängigen Permeabilität durch einen Rechenalgorithmus in einem bestimmten Messpunkt.

Mit dem Verfahren wird eine richtungsempfindliche magnetische Durchflutung der Werkstückoberfläche zur richtungsabhängigen Bestimmung der Permeabilität und damit des mechanischen Spannungszustandes ermöglicht. Die darauffolgende Ermittlung des mechanischen Spannungszustandes wird durch die Anwendung des magnetoelastischen Effektes ermöglicht. Die Erfassung der mechanischen Spannungen erfolgt mit diesem Verfahren berührungslos, d.h. die Sensoranordnung kommt nicht in direkten Kontakt mit der Oberfläche. Es müssen auch keine Hilfsmittel auf die Oberfläche aufgebracht werden und es muss keine Bearbeitung der Werkstückoberfläche erfolgen. Das vorgeschlagene Verfahren arbeitet somit berührungslos und applikationsfrei, d.h. die Messung kann an beliebigen Oberflächenpunkten des Werkstücks erfolgen, ohne dass dort Vorrichtungen angebracht werden müssen. Das berührungslose und applikationsfreie Verfahren erlaubt es somit, dass sehr viele Messpunkte an einem Objekt innerhalb kurzer Zeit vermessen werden können, oder sogar eine Oberflächenkartierung erfolgen kann.

Bevorzugt werden mehrere Messpunkte des Werkstücks bestimmt und daraus eine Bestimmung einer richtungsabhängigen Permeabilität ermöglicht wird, und so eine Kartierung des Eigenspannungstensors erfolgt.

Weitere Merkmale, Eigenschaften und Vorteile der vorliegenden Erfindung ergeben sich aus der nachfolgenden Beschreibung unter Bezugnahme auf die beiliegenden Figuren. Darin zeigt schematisch:
- FIG 1: ein erstes Beispiel eines einzelnen Basisspulensystems mit zugeordnetem Werkstück,
- FIG 2: ein zweites Beispiel eines einzelnen Basisspulensystems mit zugeordnetem Werkstück,
- FIG 3: ein drittes Beispiel eines einzelnen Basisspulensystems mit zugeordnetem Werkstück,
- FIG 4: schematische Darstellung (Draufsicht) der Basisspulensysteme aus Fig.3, Fig.2, Fig.1,
- FIG 5: ein erstes Beispiel einer erfindungsgemäßen Sensoranordnung mit Differenzwinkel 45°,
- FIG 6: ein zweites Beispiel einer erfindungsgemäßen Sensoranordnung mit Differenzwinkel 60°,
- FIG 7: ein drittes Beispiel einer erfindungsgemäßen Sensoranordnung mit Differenzwinkel 120°,
- FIG 8: als viertes Beispiel einer erfindungsgemäßen Sensoranordnung ein erstes Verbundspulensystem,
- FIG 9: als fünftes Beispiel einer erfindungsgemäßen Sensoranordnung ein zweites Verbundspulensystem,
- FIG 10: als sechstes Beispiel einer erfindungsgemäßen Sensoranordnung ein drittes Verbundspulensystem.

An mechanisch beanspruchten Werkstücken prägt sich durch die einwirkenden Kräfte und Momente ein mehrachsiger Spannungszustand aus, der in einer infinitesimal dünnen Oberflächenschicht als zweidimensional betrachtet werden kann. Die Bestimmung des richtungsabhängigen Spannungszustandes erfolgt mit Hilfe des magnetoelastischen Effektes. Dieser Effekt bildet einen Zusammenhang ab zwischen mechanischen Eigenschaften (mechanischer Spannungszustand) und einer magnetischen Materialeigenschaft, der Permeabilität.

Die vorgeschlagene Erfindung basiert auf der Anwendung einer speziell gestalteten und angeordneten Sensoranordnung aus mehreren Basisspulensystemen. Ein nachgeschalteter Rechenalgorithmus bestimmt den Betrag und die Richtung der einwirkenden mechanischen Oberflächenspannungen. Zur richtungsabhängigen Bestimmung der Permeabilität und damit des mechanischen Spannungszustandes ist auch eine möglichst richtungsempfindliche magnetische Durchflutung der Werkstückoberfläche erforderlich.

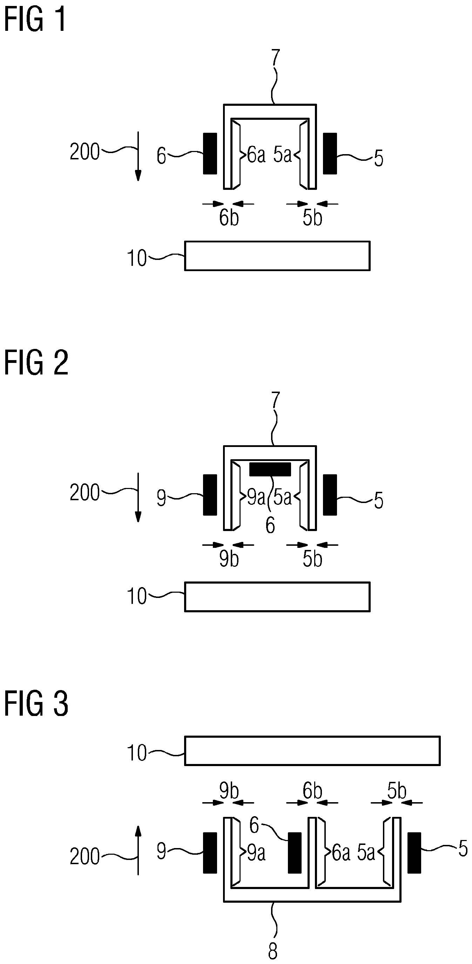

FIG 1 zeigt ein erstes Beispiel eines Basisspulensystems. Dieses umfasst zumindest eine Erregerspule 6 und eine Empfängerspule 5. Dabei sind die Erregerspule 6 und die Empfängerspule 5 auf einem gemeinsamen U-Ferritkern 7 angeordnet. Die Empfängerspule 5 umfasst einen Spulenkern 5a mit einem Spulenkerndurchmesser 5b und die Erregerspule 6 umfasst ebenfalls einen Spulenkern 6a mit einem Spulenkerndurchmesser 6b. Dabei kann der Spulenkern 5a und der Spulenkern 6a auf den Schenkeln des U-Ferritkerns angeordnet sein. Durch das Verhältnis des Abstandes des Spulenkerns 6a und des Spulenkerns 5a sowie durch das Verhältnis des Spulenkerndurchmessers 6b und des Spulenkerndurchmessers 5b wird die Richtungssensitivität vorgegeben.

FIG 2 zeigt ein zweites Beispiel eines weiteren Basisspulensystems. Dieses umfasst eine Erregerspule 6, eine erste Empfängerspule 5 und eine zweite Empfängerspule 9, welche auf einem U-Ferritkern 7 angeordnet sind. Die Erregerspule 6 ist zentral zwischen der ersten Empfängerspule 5 und der zweiten Empfängerspule 9 angeordnet. Dabei sind die beiden Empfängerspulen 5,9 auf den Schenkeln des U-Ferritkerns 7 angeordnet.

FIG 3 zeigt ein drittes Beispiel eines weiteren Basisspulensystems. Dieses umfasst eine Erregerspule 6, eine erste Empfängerspule 5 und eine zweite Empfängerspule 9, welche auf einem E-Ferritkern 8 angeordnet sind. Dabei ist die Erregerspule 6 zentral zwischen der ersten Empfängerspule 5 und der zweiten Empfängerspule 9 angeordnet. Dabei sind die beiden Empfängerspulen 5,9 als auch die Erregerspule 6 auf den Schenkeln des E-Ferritkerns 8 angeordnet.

Selbstverständlich können auch andere Ferritkerne, insbesondere EI-Ferritkerne, oder auch C - Ferritkerne etc. herangezogen werden. Die dargestellten Basisspulensysteme sind somit nur beispielhaft und dienen dem Verständnis.

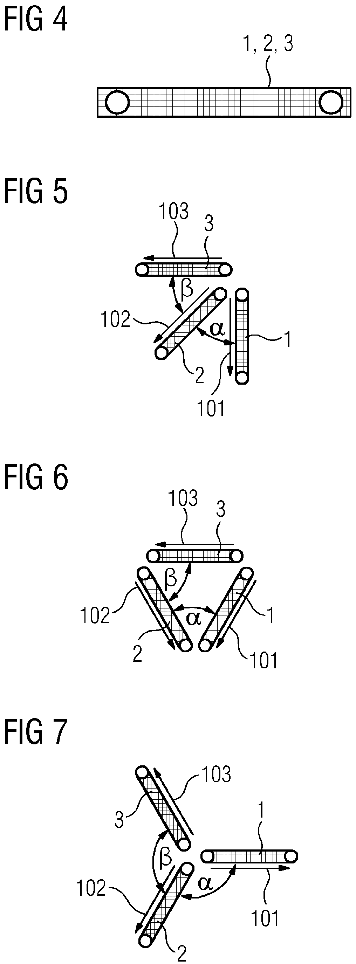

Das Basisspulensystem der Figuren 1,2 oder 3 wird nachfolgend - wie in Figur 4 gezeigt - schematisch einheitlich als schraffierter Balken dargestellt. Dabei kann der Balken je mit 1,2 oder 3 nummeriert sein, je nachdem ob es sich um das erste Basisspulensystem, das zweite Basisspulensystem oder das dritte Basisspulensystem handelt. Das bedeutet, dass für einen schraffierten Balken in den nachfolgenden Figuren jeweils eines der oben beschriebenen Basisspulensysteme eingesetzt werden kann. Auch sind selbstverständlich andere Basisspulensysteme, z.B. auf einen EI-Ferritkern, welche nicht ausdrücklich beschrieben oder aufgeführt werden, einsetzbar.

FIG 5 zeigt sehr schematisch ein erstes Beispiel einer ersten erfindungsgemäßen Sensoranordnung zur Erfassung von Oberflächenspannungen. Die Sensoranordnung besteht aus zumindest einem ersten Basisspulensystem 1 und mit einer ersten Richtung 101 und einer ersten Richtungssensitivität. Dabei kann als erstes Basisspulensystem 1 eines der oben genannten Basisspulensysteme verwendet werden. Selbstverständlich können auch Basisspulensysteme mit EI-Ferritkern etc. verwendet werden. Weiterhin umfasst die Sensoranordnung zumindest ein zweites Basisspulensystem 2 mit einer zweiter Richtung 102 und einer zweiten Richtungssensitivität. Weiterhin umfasst die Sensoranordnung zumindest ein drittes Basisspulensystem 3 mit einer dritten Richtung 103 und einer dritten Richtungssensitivität. Das erste Basisspulensystem 1 und das zweite Basisspulensystem 2 bilden einen ersten Differenzwinkel α und das zweiten Basisspulensystem 2 und das dritte Basisspulensystem 3 einen zweiten Differenzwinkel β aus. Dabei entsprechen die Basisspulensysteme 1,2,3 jeweils einem der Basisspulensysteme der Figuren 1,2 oder 3.

Dabei bilden die erste Richtung 101 und die zweite Richtung 102 und die dritte Richtung 103 jeweils einen Differenzwinkel α,β mit α,β größer 0 Grad aus. Zudem sind die Richtungen 101, 102, 103 so angeordnet, dass das erste Basisspulensystem 1 außerhalb der zweiten und der dritten Richtungssensitivität, das zweite Basisspulensystem 2 außerhalb der ersten und der dritten Richtungssensitivität, und das dritte Basisspulensystem 3 außerhalb der ersten und der zweiten Richtungssensitivität angeordnet ist.

Im Beispiel der FIG 5 hat das erste Basisspulensystem 1 und das zweite Basisspulensystem 2 zudem einen Differenzwinkel α und das zweite Basisspulensystem 2 und das dritte Basisspulensystem 3 einen Differenzwinkel β, wobei der erste Differenzwinkel α und der zweite Differenzwinkel β jeweils 45 Grad aufweisen. Dabei können die drei Basisspulensysteme 1, 2, 3 auf einer Halteanordnung (nicht gezeigt) angebracht sein.

FIG 6 zeigt ein zweites Beispiel einer zweiten erfindungsgemäßen Sensoranordnung mit erfindungsgemäßen Basisspulensystemen in der das erste Basisspulensystem 1 und das zweite Basisspulensystem 2 einen ersten Differenzwinkel α und das zweite Basisspulensystem 2 und das dritte Basisspulensystem 3 einen zweiten Differenzwinkel β aufweisen, wobei der erste Differenzwinkel α und der zweite Differenzwinkel β 60 Grad sind. Dabei kann als jeweiliges Basisspulensystem eines der oben genannten Basisspulensysteme verwendet werden. Selbstverständlich können auch Basisspulensysteme mit EI-Ferritkern etc. verwendet werden. Auch hier liegen die Richtungssensitivitäten eines jeweiligen Basisspulensystems außerhalb der anderen beiden Richtungssensitivitäten der beiden anderen Basisspulensysteme.

FIG 7 zeigt ein drittes Beispiel einer dritten erfindungsgemäßen Sensoranordnung mit erfindungsgemäßen Basisspulensystemen in der das erste Basisspulensystem 1 und das zweite Basisspulensystem 2 einen ersten Differenzwinkel α und das zweite Basisspulensystem 2 und das dritte Basisspulensystem 3 einen zweiten Differenzwinkel β aufweisen, und wobei der erste Differenzwinkel α und der zweite Differenzwinkel β 120 Grad sind. Dabei kann als Basisspulensystem 1,2 oder 3 eines der oben genannten Basisspulensysteme verwendet werden. Selbstverständlich können auch Basisspulensysteme mit EI-Ferritkern etc. verwendet werden. Auch hier liegen die Richtungssensitivitäten eines jeweiligen Basisspulensystems außerhalb der anderen beiden Richtungssensitivität der beiden anderen Basisspulensysteme.

Die Anordnung im Differenzwinkel von beispielsweise 45 Grad, 60 Grad, 90 Grad (nicht gezeigt) oder 120 Grad hat neben der Symmetrie auch den Vorteil einfacher Gleichungssysteme, welche für die Bestimmung der Oberflächenspannung günstig sind. Zudem kompensieren sich auf diese Weise gegebenenfalls Unsymmetrien, welche in der Herstellung oder der Handhabung der Sensoranordnung liegen.

Dabei kann als Basisspulensystem jedes der oben beschriebenen Basisspulensysteme herangezogen werden, die selbstverständlich auch noch untereinander kombiniert werden können. Auch die nicht-erwähnten Basisspulensysteme die z.B. auf einem C-Kern oder EI-Kern angeordnet sind, können selbstverständlich herangezogen werden.

Aus dem Verhältnis des Durchmessers und des Abstandes der Spulenkerne 6a, 5a, 9a ergibt sich die Richtungsempfindlichkeit der Anordnung. Kleine Kerndurchmesser und große Kernabstände ergeben eine sehr richtungsempfindliche Sensoranordnung. Allerdings muss bei großen Kernabständen beachtet werden, dass im Einflussgebiet eine inhomogene Spannungsverteilung besteht, die dann durch das Spulensystem quasi integriert, d.h. in der Fläche gemittelt wird. Bei der Dimensionierung des Spulensystems ist daher ein Kompromiss zwischen Richtungssensitivität und räumlicher Auflösung anzustreben.

Bei der Veränderung von Gefügestrukturen des Werkstücks 10 (FIG 1, 2,3) verändert sich ebenfalls die Permeabilität des Materials, welche im Wesentlichen mit Hilfe des Eigenspannungstensors beschrieben werden kann. Wird die Permeabilität des Werkstücks 10 überwacht, insbesondere kontinuierlich überwacht, so kann durch die Änderung der richtungsgebundenen Permeabilität auf die Änderung des Gefüges des Werkstücks 10 geschlossen werden. Die Bestimmung eines ortsaufgelösten Eigenspannungstensors mit Hilfe des magnetoelastischen Messprinzips ermöglicht nun eine Erkennung von Materialeigenschaften bzw. ihrer Veränderungen. Dazu muss der vollständige Eigenspannungstensor ermittelt werden. Der Eigenspannungstensor enthält als Informationsparameter die Amplitude der Hauptspannungen und die Lage bzw. die Winkelorientierung des Hauptspannungssystems.

Dies kann mit der erfindungsgemäßen Sensoranordnung erreicht werden. Mit Hilfe dieser drei unabhängigen Messwerte können insbesondere entweder die drei Spannungskomponenten, oder die Kennwerte des Hauptspannungszustandes ermittelt werden, mit deren Hilfe wiederum der Eigenspannungstensor bestimmt werden kann. Bevorzugt wird die Oberfläche des Werkstücks 10 mit der Sensoranordnung überstrichen. Da sich die Permeabilität des Werkstücks 10 als eine Funktion der Beanspruchung ändert, kann sie für die Bestimmung der Beanspruchung und der Ermüdung eines Werkstücks herangezogen werden.

Die Erfassung der mechanischen Spannungen erfolgt dabei berührungslos, d.h. der Sensoranordnung kommt nicht in direkten Kontakt mit der Oberfläche des Werkstücks 10. Es müssen auch keine Hilfsmittel auf die Oberfläche aufgebracht werden und es braucht keine Bearbeitung der Werkstückoberfläche erfolgen, sofern eine bestimmte Rauigkeit bzw. Ebenheit in Bezug zur Sensorkopfgröße gegeben ist. Die erfindungsgemäße Sensoranordnung arbeitet berührungslos und applikationsfrei, d.h. die Messung kann an beliebigen Oberflächenpunkten des Werkstücks 10 erfolgen, ohne dass dort Vorrichtungen angebracht werden müssen. Die erfindungsgemäße Sensoranordnung kann an allen Punkten der Werkstückoberfläche 10 in geringem Abstand, insbesondere zwischen 0.5 mm und 1 mm, positioniert werden, sofern eine bestimmte Ebenheit der Oberfläche im Verhältnis zum Durchmesser der Sensoranordnung gegeben ist. Die maximale Abstandsdifferenz innerhalb der Basisspulensysteme 1,2,3 untereinander sollte nicht mehr als 20% des Nennabstandes in Richtung zu der Oberfläche 200 (FIG 1,2,3) betragen.

Zur zerstörungsfreien Prüfung von Materialeigenschaften kann die Sensoranordnung kontinuierlich das Werkstück 10 überstreichen; dabei kann sogar eine Oberflächenkartierung erfolgen.

Neben der Anordnung von separaten Basisspulensystemen können diese Basisspulensysteme auch auf einem Ferritkern vereint werden. Dazu ist allerdings die Verlagerung der Anordnungsgeometrie in die Gestalt des Ferritkerns (bzw. allgemein des Spulenkerns) notwendig, wie nachfolgend an einigen Beispielen gezeigt ist.

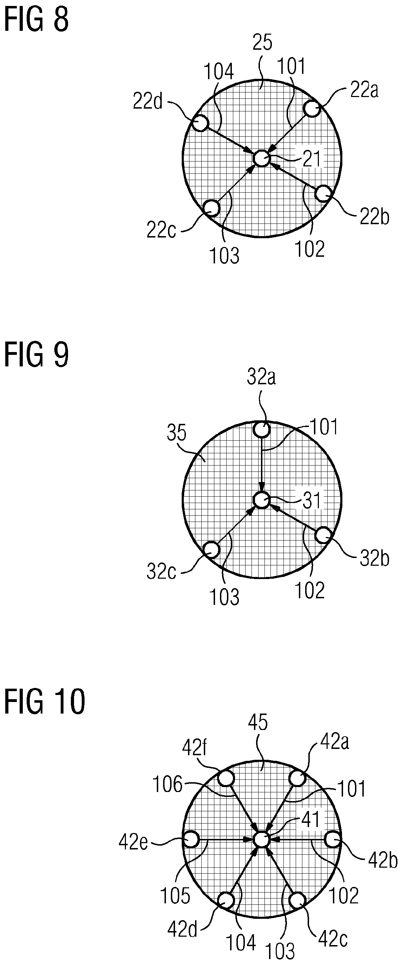

FIG 8 zeigt eine solche erste Sensoranordnung, welche durch ein Verbundspulensystem 20 gegeben ist. Diese hat als ein erstes Basisspulensystem eine Verbunderregerspule 21 und eine erste Verbundempfängerspule 22a mit einer ersten Richtung 101 und einer ersten Richtungssensitivität, als ein zweites Basisspulensystem die Verbunderregerspule 21 und eine zweite Verbundempfängerspule 22b, eine zweite Richtung 102 und eine zweite Richtungssensitivität. Ein drittes Basisspulensystem ist die Verbunderregerspule 21 und eine dritte Verbundempfängerspule 22c, eine dritte Richtung 103 sowie eine dritte Richtungssensitivität. Die Verbunderregerspule 21 und die vierte Verbundempfängerspule 22d stellen ein weiteres Basisspulensystem mit einer vierten Richtung 104 und einer vierten Richtungssensitivität dar, wobei die Verbunderregerspule 21 und die vier Verbundempfängerspulen 22a,b,c,d auf einem gemeinsamen Ferritkern 25 angeordnet sind. Dabei weisen die vier Verbundempfängerspulen 22a-d jeweils den gleichen Abstand zur Verbunderregerspule 21 auf und sind auch im gleichen Abstand zueinander angeordnet. Die vier Verbundempfängerspulen 22a-d sind in diesem Beispiel in einem Differenzwinkel von jeweils 90 Grad zueinander angeordnet. Eine fünfte Richtungssensitivität kann durch Auswertung der Signale der Verbundempfängerspulen 22a und 22b oder 22d und 22c erreicht werden. Eine sechste Richtungssensitivität kann durch Auswertung der Signale der Verbundempfängerspulen 22b und 22c oder 22a und 22d erreicht werden. Das gleiche Schema zur Erzeugung weiterer zusätzlicher Richtungssensitivitäten kann auch auf die im Folgenden erwähnten Verbundspulensysteme 30 und 40 angewandt werden.

FIG 9 zeigt eine solche zweite Sensoranordnung, welche durch ein zweites Verbundspulensystem 30 gegeben ist. Dieses umfasst als ein erstes Basisspulensystem eine Verbunderregerspule 31 und eine erste Verbundempfängerspule 32a mit einer ersten Richtung 101 und einer ersten Richtungssensitivität, und als ein zweites Basisspulensystem die Verbunderregerspule 31 und eine zweite Verbundempfängerspule 32b mit einer zweiten Richtung 102 und einer zweiten Richtungssensitivität sowie als ein drittes Basisspulensystem die Verbunderregerspule 31 und eine dritte Verbundempfängerspule 32c mit einer dritten Richtung 103 und einer dritten Richtungssensitivität und wobei die drei Verbundempfängerspulen 32a,b,c auf einem gemeinsamen Ferritkern 35 angeordnet sind. Dabei weisen die drei Verbundempfängerspulen 32a-c den gleichen Abstand zur Verbunderregerspule 31 auf und sind im gleichen Abstand zueinander angeordnet. Die drei Verbundempfängerspulen 32a-c sind in diesem Beispiel in einem Differenzwinkel von 120 Grad zueinander angeordnet.

FIG 10 zeigt eine solche dritte Sensoranordnung, welche durch ein drittes Verbundspulensystem 40 gegeben ist. Dieses umfasst als ein erstes Basisspulensystem eine Verbunderregerspule 41 und eine erste Verbundempfängerspule 42a mit einer ersten Richtung 101 und einer ersten Richtungssensitivität, als ein zweites Basisspulensystem die Verbunderregerspule 41 und eine zweite Verbundempfängerspule 42b mit einer zweiten Richtung 102 und einer zweiten Richtungssensitivität sowie als ein drittes Basisspulensystem die Verbunderregerspule 41 und eine dritte Verbundempfängerspule 42c mit einer dritten Richtung 103 und einer dritten Richtungssensitivität. Weiterhin umfasst diese Sensoranordnung als weiteres Basisspulensystem die Verbunderregerspule 41 und eine vierte Verbundempfängerspule 42d mit einer vierten Richtung 104 und einer vierten Richtungssensitivität. Zudem umfasst diese Sensoranordnung als weiteres Basisspulensystem die Verbunderregerspule 41 und eine fünfte Verbundempfängerspule 42e mit einer fünften Richtung 105 und einer fünften Richtungssensitivität. Zusätzlich umfasst diese Sensoranordnung als weiteres Basisspulensystem die Verbunderregerspule 41 und eine sechste Verbundempfängerspule 42f mit einer sechsten Richtung 106 und einer sechsten Richtungssensitivität. Dabei sind die sechs Verbundempfängerspulen 42a-f und die Verbunderregerspule 41 auf einem gemeinsamen Ferritkern 45 angeordnet. Dabei weisen die sechs Verbundempfängerspulen 42a-f den gleichen Abstand zur Verbunderregerspule 41 auf und sind im gleichen Abstand zueinander angeordnet. Die sechs Verbundempfängerspulen 42a-f weisen in diesem Beispiel einen Differenzwinkel von 60 Grad zueinander auf.

Selbstverständlich ist die Anzahl der Verbundempfängerspulen 22a-d, 32a-c, 42a-f nicht beschränkt, ebenso wenig wie die Anzahl der Verbunderregerspule 21,31,41. Wie oben schon erwähnt, haben die Anordnungen mit Differenzwinkeln von 45 Grad, 60 Grad, 90 Grad (nicht gezeigt), oder 120 Grad, neben einer symmetrischen Anordnung auch den Vorteil einfacher Gleichungssysteme, welche zur Berechnung günstig ist.

Durch die Verwendung von mehr als drei Basisspulensystemen wie bei den Verbundspulensystemen, können zusätzliche Redundanzen erzeugt werden, oder z.B. auch Plausibilitätsprüfungen durchgeführt werden.

Der Vorteil der Anwendung mehrerer Basisspulensysteme 1a-c besteht in der einfachen Herstellbarkeit und Verfügbarkeit von U-, E, EI oder anderen Kernformen, vorzugsweise Ferriten sowie der dazugehörigen Anordnung der Basisspulensysteme.

Bei der elektrischen Verschaltung dieser Basisspulensysteme muss darauf geachtet werden, für alle Basisspulensysteme eine möglichst gleiche Empfindlichkeit zu erreichen. Neben dem Abgleich der Empfängerspule ist dabei besonders auf eine identische Erregung zu achten. Das kann vorteilhaft durch eine elektrische Reihenschaltung der Erregerspulen sichergestellt werden. Die Empfängerspulen der dargestellten Beispiele sind im Falle mehrerer Basisspulensysteme in einer Richtung vorzugsweise in Reihenschaltung zu betreiben (U-Basisspulensystem, EI-Basisspulensystem, Verbundspulensysteme). In das Gleichungssystem des Mohrschen Spannungskreises sind zur Berechnung des Spannungstensors die für die verschiedenen Richtungen der Basisspulen zutreffenden Winkelorientierungen (bzw. Richtungen 101 bis 106) einzusetzen. Durch die Verwendung von mehr als drei solchen Basisspulensystemen können zusätzliche Redundanzen erzeugt werden, oder z.B. auch Plausibilitätsprüfungen durchgeführt werden.

Durch die Prüfung von Werkstücken 10 mit der erfindungsgemäßen Sensoranordnung können zerstörungsfrei Rückschlüsse auf deren Gefügeänderungen getroffen werden. Zudem ist die erfindungsgemäße Sensoranordnung mit dem erfindungsgemäßen Verfahren zur permanenten Überwachung von Werkstücken 10 in Anlagen geeignet. Somit lässt sich z.B. Ermüdung des Materials, bevor Schäden sichtbar werden, erkennen. Brüche oder Risse können somit vermieden werden. Die erfindungsgemäße Sensoranordnung und das erfindungsgemäße Verfahren arbeiten berührungslos und applikationsfrei, d.h. die Messung kann an beliebigen Oberflächenpunkten des Werkstücks 10 erfolgen, ohne dass dort Vorrichtungen angebracht werden müssen.

## Patentansprüche

1. Sensoranordnung zur Erfassung von Oberflächenspannungen und/oder des Gefügezustandes eines ferromagnetischen Werkstücks (10),
**dadurch gekennzeichnet, dass**
- zumindest ein in einer ersten Richtung (101) angeordnetes erstes Basisspulensystem (1,22a,32a,42a) mit einer ersten Richtungssensitivität, vorgesehen ist, wobei das erste Basisspulensystem (1,22a,32a,42a) zumindest eine Erregerspule (6) und eine Empfängerspule (5) auf einem gemeinsamen Ferritkern (7) zur richtungssensitiven magnetischen Durchflutung einer Oberfläche des Werkstücks (10) und zur richtungsabhängigen Bestimmung der Permeabilität umfasst,
- zumindest ein in einer zweiten Richtung (102) angeordnetes zweites Basisspulensystem (2,22b,32b,42b) mit einer zweiten Richtungssensitivität vorgesehen ist, wobei das zweite Basisspulensystem (2,22b,32b,42b) zumindest eine Erregerspule (6) und eine Empfängerspule (5) auf einem gemeinsamen Ferritkern (7) zur richtungssensitiven magnetischen Durchflutung einer Oberfläche des Werkstücks (10) und zur richtungsabhängigen Bestimmung der Permeabilität umfasst,
- zumindest ein in einer dritten Richtung (103) angeordnetes drittes Basisspulensystem (3, 22c,32c,42c) mit einer dritten Richtungssensitivität vorgesehen ist, wobei das dritte Basisspulensystem (3, 22c,32c,42c) zumindest eine Erregerspule (6) und eine Empfängerspule (5) auf einem gemeinsamen Ferritkern (7) zur richtungssensitiven magnetischen Durchflutung einer Oberfläche des Werkstücks (10) und zur richtungsabhängigen Bestimmung der Permeabilität umfasst,
- und wobei zumindest das erste Basisspulensystem (1,22a,32a,42a) und das zweite Basisspulensystem (2,22b,32b,42b) einen ersten Differenzwinkel (α1) und das zweite Basisspulensystem (2,22b,32b,42b) und das dritte Basisspulensystem (3,22c,32c,42c) einen zweiten Differenzwinkel (β1) ausbilden,
wobei das erste Basisspulensystem (1,22a,32a,42a) außerhalb der zweiten Richtungssensitivität und der dritten Richtungssensitivität, das zweite Basisspulensystem (2,22b,32b,42b) außerhalb der ersten Richtungssensitivität und der dritten Richtungssensitivität und das dritte Basisspulensystem (3, 22c,32c,42c) außerhalb der ersten Richtungssensitivität und der zweiten Richtungssensitivität angeordnet ist,
- und wobei die Sensoranordnung so aufgebaut ist, dass die Spulenachsen des ersten Basisspulensystems (1,22a,32a,42a), des zweiten Basisspulensystems (2,22b,32b,42b) und des dritten Basisspulensystems (3, 22c,32c,42c) in Bezug zur Oberfläche des Werkstücks (10) während der Messung orthogonal ausgerichtet sind,
- so dass mittels eines jeden Basisspulensystems ein unabhängiger Messwert zur Ermittlung eines vollständigen Eigenspannungstensor erhältlich ist, woraus die mechanischen Oberflächenspannungen des Werkstücks (10) zumindest teilweise ermittelbar sind.

2. Sensoranordnung nach Anspruch 1,
**dadurch gekennzeichnet, dass** die Erregerspule (6) als auch die Empfängerspule (5) einen Spulenkern (5a,6a) mit einem Spulenkerndurchmesser (5b,6b) aufweist und die Richtungssensitivität durch das Verhältnis des Abstandes der beiden Spulenkerne (5a,6a) und/oder durch das Verhältnis der beiden Spulenkerndurchmesser (5b,6b) gegeben ist.

3. Sensoranordnung nach Anspruch 1 oder 2,
**dadurch gekennzeichnet, dass** das erste Basisspulensystem (1) und/oder das zweite Basisspulensystem (2) und/oder das dritte Basisspulensystem (3) eine Erregerspule (6) und eine Empfängerspule (5) umfasst, welche auf einem U-Ferritkern (7) angeordnet sind.

4. Sensoranordnung nach einem der Ansprüche 1-3,
**dadurch gekennzeichnet, dass** das erste Basisspulensystem (1) und/oder das zweite Basisspulensystem (2) und/oder das dritte Basisspulensystem (3) eine Erregerspule (6) und eine erste Empfängerspule (5) und eine zweite Empfängerspule (9) umfasst, welche auf einem U-Ferritkern (7) angeordnet sind, wobei die Erregerspule (6) zwischen, insbesondere zentral zwischen, der ersten Empfängerspule (5) und der zweiten Empfängerspule (9) angeordnet ist.

5. Sensoranordnung nach einem der Ansprüche 1-4,
**dadurch gekennzeichnet, dass** das erste Basisspulensystem (1) und/oder das zweite Basisspulensystem (2) und/oder das dritte Basisspulensystem (3) eine Erregerspule (6) und eine erste Empfängerspule (5) und eine zweite Empfängerspule (9) umfasst, welche auf einem E-Ferritkern (8) angeordnet sind, wobei die Erregerspule (6) insbesondere mittig zentral, zwischen der ersten Empfängerspule (5) und der zweite Empfängerspule (9) angeordnet ist.

6. Sensoranordnung nach einem der Ansprüche 1-5,
**dadurch gekennzeichnet, dass** von den drei Basisspulensystemen (1,2,3) zumindest zwei Erregerspulen (6) eine Reihenschaltung aufweisen.

7. Sensoranordnung nach einem der Ansprüche 1-6,
**dadurch gekennzeichnet, dass** die zumindest drei Basisspulensysteme (1,2,3) durch ein Verbundspulensystem (20) gegeben sind,
welches als ein erstes Basisspulensystem eine Verbunderregerspule (21) und eine erste Verbundempfängerspule (22a) umfasst, als ein zweites Basisspulensystem die Verbunderregerspule (21) und eine zweite Verbundempfängerspule (22b) und als ein drittes Basisspulensystem die Verbunderregerspule (21) und eine dritte Verbundempfängerspule (22c) sowie eine weitere, vierte Verbundempfängerspule (22d) und wobei die Verbunderregerspule (21) und die vier Verbundempfängerspulen (22a,b,c,d) auf einem gemeinsamen Ferritkern (25) angeordnet sind.

8. Sensoranordnung nach Anspruch 7,
**dadurch gekennzeichnet, dass** die vier Verbundempfängerspulen (22a-d) den gleichen Abstand zur Verbunderregerspule (21) aufweisen und jeweils benachbarten Verbundempfängerspulen (22a-d) im gleichen Abstand zueinander angeordnet sind.

9. Sensoranordnung nach einem der Ansprüche 1-6,
**dadurch gekennzeichnet, dass** die zumindest drei Basisspulensysteme (1,2,3) durch ein Verbundspulensystem (30) gegeben sind, welches als ein erstes Basisspulensystem eine Verbunderregerspule (31) und eine erste Verbundempfängerspule (32a) umfasst, als eine zweite Basisspulensystem die Verbunderregerspule (31) und eine zweite Verbundempfängerspule (32b) und als ein drittes Basisspulensystem die Verbunderregerspule (31) und eine dritte Verbundempfängerspule (32c) und wobei die drei Verbundempfängerspulen (32a,b,c) und die Verbunderregerspule (31) auf einem gemeinsamen Ferritkern (35) angeordnet sind.

10. Sensoranordnung nach Anspruch 9,
**dadurch gekennzeichnet, dass** die drei Verbundempfängerspulen (32a,b,c) den gleichen Abstand zur Verbunderregerspule (31) aufweisen und jeweils benachbarte Empfängerspulen (32a,b,c) im gleichen Abstand zueinander angeordnet sind.

11. Sensoranordnung nach einem der Ansprüche 1-6,
**dadurch gekennzeichnet, dass** die zumindest drei Basisspulensysteme (1,2,3) durch ein Verbundspulensystem (40) gegeben sind, welches als ein erstes Basisspulensystem eine Verbunderregerspule (41) und eine erste Verbundempfängerspule (42a) umfasst, als ein zweites Basisspulensystem die Verbunderregerspule (41) und eine zweite Verbundempfängerspule (42b) und als ein drittes Basisspulensystem die Verbunderregerspule (41) und eine dritte Verbundempfängerspule (42c) sowie eine vierte Verbundempfängerspule (42d), eine fünfte Verbundempfängerspule (42e)und eine sechste Verbundempfängerspule (42f) und wobei die sechs Verbundempfängerspulen (42a-f) und die Verbunderregerspule (41) auf einem gemeinsamen Ferritkern (45) angeordnet sind.

12. Sensoranordnung nach Anspruch 11,
**dadurch gekennzeichnet, dass** die sechs Verbundempfängerspulen (42a-f) den gleichen Abstand zur Verbunderregerspule (41) aufweisen und jeweils benachbarte Empfängerspulen (42a-f) im gleichen Abstand zueinander angeordnet sind.

13. Sensoranordnung nach einem der vorhergehenden Ansprüche,
**dadurch gekennzeichnet, dass** der erste Differenzwinkel (α1) gleich dem zweiten Differenzwinkel (β1) ist, und insbesondere 45 Grad beträgt.

14. Sensoranordnung nach einem der vorhergehenden Ansprüche 1-12,
**dadurch gekennzeichnet, dass** der erste Differenzwinkel (α1) und der zweite Differenzwinkel (β1) 60 Grad betragen.

15. Sensoranordnung nach einem der vorhergehenden Ansprüche 1-12,
**dadurch gekennzeichnet, dass** der erste Differenzwinkel (α1) und der zweite Differenzwinkel (β1) 120 Grad betragen.

16. Sensoranordnung nach einem der vorhergehenden Ansprüche,
**dadurch gekennzeichnet, dass** zumindest eine Spulenachse umfasst ist, und wobei die Sensoranordnung in Bezug auf eine Oberfläche des Werkstückes (10) so angeordnet ist, dass eine orthogonale Ausrichtung der Spulenachse zur Oberfläche des Werkstücks (10) erreicht wird und wobei die Sensoranordnung zu dieser Oberfläche des ferromagnetischen Werkstücks (10) einen Nennabstand aufweist, wobei zumindest das erste Basisspulensystem (1,22a,32a,42a) und das zweite Basisspulensystem (2,22b,32b,42b)und das dritte Basisspulensystem (3,22c,32c,42c) untereinander einen Abstand von maximal 20% des Nennabstands aufweisen.

17. Sensoranordnung nach einem der vorhergehenden Ansprüche,
**dadurch gekennzeichnet, dass** zumindest das erste Basisspulensystem (1,22a,32a,42a) als auch das zweite Basisspulensystem (2,22b,32b,42b) als auch das dritte Basisspulensystem (3,22c,32c,42c) an einer geeigneten Haltevorrichtung angeordnet sind.

18. Verfahren zur Bestimmung der mechanischen Oberflächenspannungen und/oder des Gefügezustandes eines ferromagnetischen Werkstücks durch die folgenden Schritte:
- Bestimmung von mindestens drei unabhängigen Messwerten durch eine Sensoranordnung nach einem der vorhergehenden Ansprüche 1-17,
- Ermittlung der richtungsabhängigen Permeabilität durch einen Rechenalgorithmus in einem bestimmten Messpunkt.

19. Verfahren nach Anspruch 18,
**dadurch gekennzeichnet, dass** mehrere Messpunkte des Werkstücks (10) bestimmt werden und daraus eine Bestimmung einer richtungsabhängigen Permeabilität ermöglicht wird, und so eine Kartierung des Eigenspannungstensors erfolgt.

## Claims

1. Sensor arrangement for detecting surface stresses and/or the microstructure state of a ferromagnetic workpiece (10), **characterized in that**
- at least one first basic coil system (1, 22a, 32a, 42a) which is arranged in a first direction (101) and has a first directional sensitivity is provided, wherein the first basic coil system (1, 22a, 32a, 42a) comprises at least one excitation coil (6) and a receiver coil (5) on a common ferrite core (7) for magnetically permeating a surface of the workpiece (10) in a direction-sensitive manner and for determining the permeability in a direction-dependent manner,
- at least one second basic coil system (2, 22b, 32b, 42b) which is arranged in a second direction (102) and has a second directional sensitivity is provided, wherein the second basic coil system (2, 22b, 32b, 42b) comprises at least one excitation coil (6) and a receiver coil (5) on a common ferrite core (7) for magnetically permeating a surface of the workpiece (10) in a direction-sensitive manner and for determining the permeability in a direction-dependent manner,
- at least one third basic coil system (3, 22c, 32c, 42c) which is arranged in a third direction (103) and has a third directional sensitivity is provided, wherein the third basic coil system (3, 22c, 32c, 42c) comprises at least one excitation coil (6) and a receiver coil (5) on a common ferrite core (7) for magnetically permeating a surface of the workpiece (10) in a direction-sensitive manner and for determining the permeability in a direction-dependent manner,
- and wherein at least the first basic coil system (1, 22a, 32a, 42a) and the second basic coil system (2, 22b, 32b, 42b) form a first differential angle (α1) and the second basic coil system (2, 22b, 32b, 42b) and the third basic coil system (3, 22c, 32c, 42c) form a second differential angle (β1),
- wherein the first basic coil system (1, 22a, 32a, 42a) is arranged outside the second directional sensitivity and the third directional sensitivity, the second basic coil system (2, 22b, 32b, 42b) is arranged outside the first directional sensitivity and the third directional sensitivity and the third basic coil system (3, 22c, 32c, 42c) is arranged outside the first directional sensitivity and the second directional sensitivity,
- and wherein the sensor arrangement is constructed in such a manner that the coil axes of the first basic coil system (1, 22a, 32a, 42a), of the second basic coil system (2, 22b, 32b, 42b) and of the third basic coil system (3, 22c, 32c, 42c) are oriented orthogonally with respect to the surface of the workpiece (10) during measurement,
- with the result that an independent measured value for determining a complete internal stress tensor can be obtained by means of each basic coil system, from which the mechanical surface stresses of the workpiece (10) can be at least partially determined.

2. Sensor arrangement according to Claim 1,
**characterized in that**
the excitation coil (6) and the receiver coil (5) have a coil core (5a, 6a) with a coil core diameter (5b, 6b), and the directional sensitivity is given by the ratio of the distance between the two coil cores (5a, 6a) and/or by the ratio of the two coil core diameters (5b, 6b).

3. Sensor arrangement according to Claim 1 or 2,
**characterized in that**
the first basic coil system (1) and/or the second basic coil system (2) and/or the third basic coil system (3) comprise(s) an excitation coil (6) and a receiver coil (5) which are arranged on a U ferrite core (7).

4. Sensor arrangement according to one of Claims 1-3,
**characterized in that**
the first basic coil system (1) and/or the second basic coil system (2) and/or the third basic coil system (3) comprise(s) an excitation coil (6) and a first receiver coil (5) and a second receiver coil (9) which are arranged on a U ferrite core (7), wherein the excitation coil (6) is arranged between, in particular centrally between, the first receiver coil (5) and the second receiver coil (9).

5. Sensor arrangement according to one of Claims 1-4,
**characterized in that**
the first basic coil system (1) and/or the second basic coil system (2) and/or the third basic coil system (3) comprise(s) an excitation coil (6) and a first receiver coil (5) and a second receiver coil (9) which are arranged on an E ferrite core (8), wherein the excitation coil (6) is arranged, in particular centrally in the centre, between the first receiver coil (5) and the second receiver coil (9).

6. Sensor arrangement according to one of Claims 1-5,
**characterized in that**
of the three basic coil systems (1, 2, 3), at least two excitation coils (6) have a series circuit.

7. Sensor arrangement according to one of Claims 1-6,
**characterized in that**
the at least three basic coil systems (1, 2, 3) are provided by a composite coil system (20) which, as a first basic coil system, comprises a composite excitation coil (21) and a first composite receiver coil (22a), as a second basic coil system, comprises the composite excitation coil (21) and a second composite receiver coil (22b) and, as a third basic coil system, comprises the composite excitation coil (21) and a third composite receiver coil (22c) as well as a further, fourth composite receiver coil (22d), wherein the composite excitation coil (21) and the four composite receiver coils (22a, b, c, d) are arranged on a common ferrite core (25).

8. Sensor arrangement according to Claim 7,
**characterized in that**
the four composite receiver coils (22a-d) are at the same distance from the composite excitation coil (21), and adjacent composite receiver coils (22a-d) are each arranged at the same distance from one another.

9. Sensor arrangement according to one of Claims 1-6,
**characterized in that**
the at least three basic coil systems (1, 2, 3) are provided by a composite coil system (30) which, as a first basic coil system, comprises a composite excitation coil (31) and a first composite receiver coil (32a), as a second basic coil system, comprises the composite excitation coil (31) and a second composite receiver coil (32b) and, as a third basic coil system, comprises the composite excitation coil (31) and a third composite receiver coil (32c), wherein the three composite receiver coils (32a, b, c) and the composite excitation coil (31) are arranged on a common ferrite core (35) .

10. Sensor arrangement according to Claim 9,
**characterized in that**
the three composite receiver coils (32a, b, c) are at the same distance from the composite excitation coil (31), and adjacent receiver coils (32a, b, c) are each arranged at the same distance from one another.

11. Sensor arrangement according to one of Claims 1-6,
**characterized in that**
the at least three basic coil systems (1, 2, 3) are provided by a composite coil system (40) which, as a first basic coil system, comprises a composite excitation coil (41) and a first composite receiver coil (42a), as a second basic coil system, comprises the composite excitation coil (41) and a second composite receiver coil (42b) and, as a third basic coil system, comprises the composite excitation coil (41) and a third composite receiver coil (42c) as well as a fourth composite receiver coil (42d), a fifth composite receiver coil (42e) and a sixth composite receiver coil (42f), wherein the six composite receiver coils (42a-f) and the composite excitation coil (41) are arranged on a common ferrite core (45) .

12. Sensor arrangement according to Claim 11,
**characterized in that**
the six composite receiver coils (42a-f) are at the same distance from the composite excitation coil (41), and adjacent receiver coils (42a-f) are each arranged at the same distance from one another.

13. Sensor arrangement according to one of the preceding claims,
**characterized in that**
the first differential angle (α1) is equal to the second differential angle (β1) and is, in particular, 45 degrees.

14. Sensor arrangement according to one of the preceding Claims 1-12,
**characterized in that**
the first differential angle (α1) and the second differential angle (β1) are 60 degrees.

15. Sensor arrangement according to one of the preceding Claims 1-12,
**characterized in that**
the first differential angle (α1) and the second differential angle (β1) are 120 degrees.

16. Sensor arrangement according to one of the preceding claims,
**characterized in that**
at least one coil axis is included, wherein the sensor arrangement is arranged with respect to a surface of the workpiece (10) in such a manner that an orthogonal orientation of the coil axis with respect to the surface of the workpiece (10) is achieved, and wherein the sensor arrangement is at a nominal distance from this surface of the ferromagnetic workpiece (10), wherein at least the first basic coil system (1, 22a, 32a, 42a) and the second basic coil system (2, 22b, 32b, 42b) and the third basic coil system (3, 22c, 32c, 42c) are at a distance of at most 20% of the nominal distance from one another.

17. Sensor arrangement according to one of the preceding claims,
**characterized in that**
at least the first basic coil system (1, 22a, 32a, 42a) and the second basic coil system (2, 22b, 32b, 42b) and the third basic coil system (3, 22c, 32c, 42c) are arranged on a suitable holding device.

18. Method for determining the mechanical surface stresses and/or the microstructure state of a ferromagnetic workpiece by means of the following steps:
- determining at least three independent measured values by means of a sensor arrangement according to one of the preceding Claims 1-17,
- determining the direction-dependent permeability at a particular measuring point by means of a computing algorithm.

19. Method according to Claim 18,
**characterized in that**
a plurality of measuring points of the workpiece (10) are determined and it is possible to determine a direction-dependent permeability therefrom, and the internal stress tensor is therefore mapped.

## Revendications

1. Agencement formant capteur pour la détection de tensions de surface et/ou de l'état de texture d'une pièce ( 10 ) ferromagnétique,
**caractérisé en ce que**
- il est prévu au moins un premier système ( 1, 22a, 32a, 42a ) de bobines de base, qui est disposé dans une première direction ( 101 ) et qui a une première sensibilité directionnelle, le premier système ( 1, 22a, 32a, 42a ) de bobines de base comprenant au moins une bobine ( 6 ) d'excitation et une bobine ( 5 ) de réception sur un noyau ( 7 ) de ferrite commun pour l'application d'un flux magnétique sensible à la direction à une surface de l'outil ( 10 ) et pour la détermination de la perméabilité en fonction de la direction,
- il est prévu au moins un deuxième système ( 2, 22b, 32b, 42b ) de bobines de base, qui est disposé dans une deuxième direction ( 102 ) et qui a une deuxième sensibilité directionnelle, le deuxième système ( 2, 22b, 32b, 42b ) de bobines de base comprenant au moins une bobine ( 6 ) d'excitation et une bobine ( 5 ) de réception sur un noyau ( 7 ) de ferrite commun pour l'application d'un flux magnétique sensible à la direction à une surface de l'outil ( 10 ) et pour la détermination de la perméabilité en fonction de la direction,
- au moins un troisième système ( 3, 22c, 32c, 42c ) de bobines de base, qui est disposé dans une troisième direction ( 103 ) et qui a une troisième sensibilité directionnelle, le troisième système ( 3, 22c, 32c, 42c ) de bobines de base comprenant au moins une bobine ( 6 ) d'excitation et une bobine ( 5 ) de réception sur un noyau ( 7 ) de ferrite commun pour l'application d'un flux magnétique sensible à la direction à une surface de l'outil ( 10 ) et pour la détermination de la perméabilité en fonction de la direction,
- et dans lequel au moins le premier système ( 1, 22a, 32a, 42a ) de bobines de base et le deuxième système ( 2, 22b, 32b, 42b ) de bobines de base forment un premier angle ( α1 ) de différence et le deuxième système ( 2, 22b, 32b, 42b ) de bobines de base et le troisième système ( 3, 22c, 32c, 42c ) de bobines de base forment un deuxième angle ( β1 ) de différence,
dans lequel le premier système ( 1, 22a, 32a, 42a ) de bobines de base est disposé à l'extérieur de la deuxième sensibilité directionnelle et de la troisième sensibilité directionnelle, le deuxième système ( 2, 22b, 32b, 42b ) de bobines de base est disposé à l'extérieur de la première sensibilité directionnelle et de la troisième sensibilité directionnelle et le troisième système ( 3, 22c, 32c, 42c ) de bobines de base est disposé à l'extérieur de la première sensibilité directionnelle et de la deuxième sensibilité directionnelle,
- et dans lequel l'agencement formant capteur est constitué de manière à ce que les axes des bobines du premier système ( 1, 22a, 32a, 42a ) de bobines de base, du deuxième système ( 2, 22b, 32b, 42b ) de bobines de base et du troisième système ( 3, 22c, 32c, 42c ) de bobines de base soient orthogonaux à la surface de la pièce ( 10 ) pendant la mesure,
- de manière à obtenir, au moyen de chaque système de bobines de base, une valeur de mesure indépendante pour la détermination d'un tenseur de tension propre complet, les tensions mécaniques de surface de la pièce ( 10 ) pouvant en être déterminées, au moins en partie.

2. Agencement formant capteur suivant la revendication 1,
**caractérisé en ce que**
la bobine ( 6 ) d'excitation, tout comme la bobine ( 5 ) de réception a un noyau ( 5a, 6a ) de bobine ayant un diamètre ( 5b, 6b ) de noyau de bobine et la sensibilité directionnelle est donnée par le rapport de la distance entre les deux noyaux ( 5a, 6a ) de bobine et/ou par le rapport entre les deux diamètres ( 5b, 6b ) de noyau de bobine.

3. Agencement formant capteur suivant la revendication 1 ou 2,
**caractérisé en ce que**
le premier système ( 1 ) de bobines de base et/ou le deuxième système ( 2 ) de bobines de base et/ou le troisième système ( 3 ) de bobines de base comprend une bobine ( 6 ) d'excitation et une bobine ( 5 ) de réception, qui sont disposées sur un noyau ( 7 ) de ferrite en U.

4. Agencement formant capteur suivant l'une des revendications 1 à 3,
**caractérisé en ce que**
le premier système ( 1 ) de bobines de base et/ou le deuxième système ( 2 ) de bobines de base et/ou le troisième système ( 3 ) de bobines de base comprend une bobine ( 6 ) d'excitation et une première bobine ( 5 ) de réception et une deuxième bobine ( 9 ) de réception, qui sont disposées sur un noyau ( 7 ) de ferrite en U, la bobine ( 6 ) d'excitation étant disposée, en étant disposée notamment de manière centrale, entre la première bobine ( 5 ) de réception et la deuxième bobine ( 9 ) de réception.

5. Agencement formant capteur suivant l'une des revendications 1 à 4,
**caractérisé en ce que**
le premier système ( 1 ) de bobines de base et/ou le deuxième système ( 2 ) de bobines de base et/ou le troisième système ( 3 ) de bobines de base comprend une bobine ( 6 ) d'excitation et une première bobine ( 5 ) de réception et une deuxième bobine ( 9 ) de réception, qui sont disposées sur un noyau ( 8 ) de ferrite en E, la bobine ( 6 ) d'excitation étant disposée, en étant disposée notamment de manière centrale au milieu, entre la première bobine ( 5 ) de réception et la deuxième bobine ( 9 ) de réception.

6. Agencement formant capteur suivant l'une des revendications 1 à 5,
**caractérisé en ce que**
des trois systèmes ( 1, 2, 3 ) de bobines de base, au moins deux bobines ( 6 ) d'excitation ont un circuit série.

7. Agencement formant capteur suivant l'une des revendications 1 à 6,
**caractérisé en ce que**
les au moins trois systèmes ( 1, 2, 3 ) de bobines de base sont donnés par un système ( 20 ) de bobines interconnectées, qui comprend, comme premier système de bobines de base, une bobine ( 21 ) d'excitation interconnectée et une première bobine ( 22a ) de réception interconnectée, comme deuxième système de bobines de base, la bobine ( 21 ) d'excitation interconnectée et une deuxième bobine ( 22b ) de réception interconnectée, et comme troisième système de bobines de base, la bobine ( 21 ) d'excitation interconnectée et une troisième bobine ( 22c ) de réception interconnectée, ainsi qu'une autre quatrième bobine ( 22d ) de réception interconnectée et dans lequel la bobine ( 21 ) d'excitation interconnectée et les quatre bobines ( 22a, b, c, d ) de réception interconnectées sont disposées sur un noyau ( 25 ) de ferrite commun.

8. Agencement formant capteur suivant la revendication 7,
**caractérisé en ce que**
les quatre bobines ( 22a-d ) de réception interconnectées ont la même distance à la bobine ( 21 ) d'excitation interconnectée et des bobines ( 22a-d ) de réception interconnectées voisines, respectivement, sont disposées à la même distance les unes des autres.

9. Agencement formant capteur suivant l'une des revendications 1 à 6,
**caractérisé en ce que**
les au moins trois systèmes ( 1, 2, 3 ) de bobines de base sont donnés par un système ( 30 ) de bobines interconnectées, qui comprend, comme premier système de bobines de base, une bobine ( 31 ) d'excitation interconnectée et une première bobine ( 32a ) de réception interconnectée, comme deuxième système de bobines de base, la bobine ( 31 ) d'excitation interconnectée et une deuxième bobine ( 32b ) de réception interconnectée, et comme troisième système de bobines de base, la bobine ( 31 ) d'excitation interconnectée et une troisième bobine ( 32c ) de réception interconnectée, les trois bobines ( 32a, b, c ) de réception interconnectées et la bobine ( 31 ) d'excitation interconnectée étant disposées sur un noyau ( 35 ) de ferrite commun.

10. Agencement formant capteur suivant la revendication 9,
**caractérisé en ce que**
les trois bobines ( 32a, b, c ) de réception interconnectées ont la même distance à la bobine ( 31 ) d'excitation interconnectée et des bobines ( 32a, b, c ) de réception voisines, respectivement, sont disposées les unes par rapport aux autres à la même distance.

11. Agencement formant capteur suivant l'une des revendications 1 à 6,
**caractérisé en ce que**
les au moins trois systèmes ( 1, 2, 3 ) de bobines de base sont donnés par un système ( 40 ) de bobines interconnectées, qui comprend, comme premier système de bobines de base, une bobine ( 41 ) d'excitation interconnectée et une première bobine ( 42a ) de réception interconnectée, comme deuxième système de bobines de base, la bobine ( 41 ) d'excitation interconnectée et une deuxième bobine ( 42b ) de réception interconnectée, et comme troisième système de bobines de base, la bobine ( 41 ) d'excitation interconnectée et une troisième bobine ( 42c ) de réception interconnectée, ainsi qu'une quatrième bobine ( 42d ) de réception interconnectée, une cinquième bobine ( 42e ) de réception interconnectée et une sixième bobine ( 42f ) de réception interconnectée, les six bobines ( 42a-f ) de réception interconnectées et la bobine ( 41 ) d'excitation interconnectée étant disposées sur un noyau ( 45 ) de ferrite commun.

12. Agencement formant capteur suivant la revendication 11,
**caractérisé en ce que**
les six bobines ( 42a-f ) de réception interconnectées ont la même distance à la bobine ( 41 ) d'excitation interconnectée et des bobines ( 42a-f ) de réception voisines, respectivement, sont disposées, les une par rapport aux autres, à la même distance.

13. Agencement formant capteur suivant l'une des revendications précédentes,
**caractérisé en ce que**
le premier angle ( α1 ) de différence est égal au deuxième angle ( β1 ) de différence, en étant notamment égal à 45 degrés.

14. Agencement formant capteur suivant l'une des revendications 1 à 12 précédentes,
**caractérisé en ce que**
le premier angle ( α1 ) de différence et le deuxième angle ( β1 ) de différence sont de 60 degrés.

15. Agencement formant capteur suivant l'une des revendication 1 à 12 précédentes,
**caractérisé en ce que**
le premier angle ( α1 ) de différence et le deuxième angle ( β1 ) de différence sont de 120 degrés.

16. Agencement formant capteur suivant l'une des revendications précédentes,
**caractérisé en ce qu'**
il y a au moins un axe de bobine et l'agencement formant capteur est disposé, par rapport à une surface de la pèce ( 10 ), de manière à obtenir une orientation orthogonale de l'axe de bobine, par rapport à la surface de la pièce ( 10 ), et l'agencement formant capteur a, par rapport à cette surface de la pièce ( 10 ) ferromagnétique, une distance nominale, au moins le premier système ( 1, 22a, 32a, 42a ) de bobine de base et le deuxième système ( 2, 22b, 32b, 42b ) de bobine de base et le troisième système ( 3, 22c, 32c, 42c ) de bobine de base ayant, entre eux, une distance représentant au maximum 20% de la distance nominale.

17. Agencement formant capteur suivant l'une des revendications précédentes,
**caractérisé en ce qu'**
au moins le premier système ( 1, 22a, 32a, 42a ) de bobines de base, tout comme également le deuxième système ( 2, 22b, 32b, 42b ) de bobines de base et également le troisième système ( 3, 22c, 32c, 42c ) de bobines de base sont disposés sur un dispositif de maintien approprié.

18. Procédé de détermination des tensions mécaniques de surface et/ou de l'état de la texture d'une pièce ferromagnétique par les stades suivants :
- détermination d'au moins trois valeurs de mesure indépendantes par un agencement formant capteur suivant l'une des revendications 1 à 17 précédentes,
- détermination de la perméabilité en fonction de la direction par un algorithme de calcul, en un point de mesure déterminé.

19. Procédé suivant la revendication 18,
**caractérisé en ce que**
l'on détermine plusieurs points de mesure de la pièce ( 10 ) et on en rend possible une détermination d'une perméabilité en fonction de la direction, et il est ainsi produit une cartographie du tenseur de tension propre.
